# EUROPEAN PATENT APPLICATION

(11) **EP 1 168 802 A1**
(43) Date of publication of application: **02.01.2002**
(21) Application number: 00305198.4
(22) Date of filing: 20.06.2000
(51) Int. Cl.: H04M 11/04, H04M 11/00

(54) **Terminal interface device**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

A unit which allows a data transmission device such as a modem or FAX to be connected to a telephone line that is employed as the communication channel for a supervised alarm system. The poll and poll response signals and low-tone associated with a supervised alarm system would interfere with the data signals flowing to and from a modem/FAX if allowed to be present on the telephone line simultaneously. The present invention will disconnect a modem/FAX from the telephone line during data transmission if an alarm condition arises, by monitoring the low tone status of the alarm system. A low tone filter is provided to improve data transmission and connection speeds. Low tone attenuation is synthesised by the present invention to indicate off-hook status to alarm monitoring equipment at the telephone exchange.

## Description

The present invention relates to apparatus for allowing a terminal device such as a modem to be used on the same telephone line as a data reporting device, such as a supervised alarm system.

One form of such an alarm system may consist of a subscriber terminal unit (STU) which is located at a subscriber premises and monitors the status of various detectors at the subscriber's premises. The STU is connected by a pre-existing telephone line to a scanner at the telephone exchange which monitors the STU. The STU produces a constant low-tone of approximately 25Hz as an indication of normal alarm state operation of the alarm system. An alarm condition is signalled by loss of low tone, which may be deliberately dropped by the STU on a change of state of a detector, or if the telephone link itself is compromised. The low tone, which is sub-audible, may persist during off-hook operation of the telephone line (i.e. spoken conversation) without interfering with normal telephone operation. In addition, the scanner polls the STU periodically for a status report, upon which the STU sends an update of the state of the alarm detectors to the scanner. Poll and poll response are made at a frequency of 2.7 kHz which is in the audible frequency, and would therefore interfere with normal off-hook operation of the line. The scanner is therefore equipped to detect when the line is in the off-hook mode and suspend this regular polling of the STU until the line becomes on-hook again. Off-hook operation is sensed by the scanner when the characteristic attenuation of low tone is detected, caused by the impedance of telephone equipment being connected across the line. If loss of low tone is detected in either on-hook or off-hook mode, the scanner immediately polls the STU for a response. If a positive alarm condition is detected or no response is received from the STU, a signal can be sent to a monitoring station and subsequent action taken. Such an alarm system is described in detail in US Patent 4,442,320 (James et. al.).

Often a telephone line may be used to connect a modem, e.g. for personal computing use and/or a FAX machine, as well as standard telephone devices. However, if such a data device is in use when an alarm condition is detected, the data signals would interfere with the poll/poll response signals from the scanner and STU. It is therefore desirable to employ a device which will allow compatibility with an alarm system of the nature described above.

It is also desirable to suspend the periodic polling of the STU while the data device is in use.

A further source of interference is the presence of low tone on the line to the modem/FAX device. It is therefore desirable to screen the modem from this signal.

A possible consequence of screening the modem from low tone is that the low tone signal may not be attenuated when the modem is off-hook. Since it is the low tone attenuation that is monitored by the scanner to detect off-hook operation, it is desirable to attenuate low tone when the device is off-hook.

Aspects of the present invention are set out in the claims.

The invention will now be described by way of example only with reference to the accompanying drawings in which:
Figure 1 is a schematic illustration of a modem interface device used with a supervised alarm system.
Figure 2 is an illustration of the components of the modem interface device.
Figure 3 illustrates the operation of the modem interface device.

The term modem will be used throughout this description as an example of a data handling device. It will be appreciated that the present invention is equally suited for use in conjunction with any telecommunication equipment which uses a telephone line as a means of communication, e.g. a FAX machine.

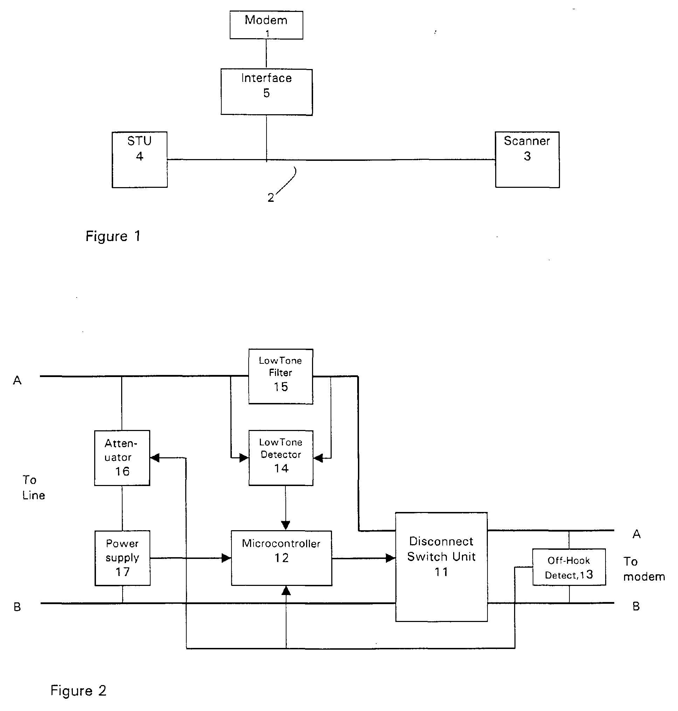

Figure 1 shows a modem 1 which is to be connected to a telephone line 2 which also supports a supervised alarm system of the type described in the introduction, whereby an STU 4 communicates with a scanner 3 at the telephone exchange. The modem is connected to the line 2 via an interface device 5 which will disconnect the modem 1 from the telephone line 2 if the telephone line 2 is required by the supervised alarm system 2,3,4. A supervised alarm system which has detected an alarm state must have unimpaired access to a telephone line so that the scanner 3 at the exchange can unambiguously interrogate the STU 4. Data signals from a modem 1 are sent over a bandwidth of conventional telephone equipment (typically 300 to 3200 Hz). The scanner 3 and STU 4 communicate at a frequency of 2700 Hz, which the modem 1 data signals would interfere with. It is therefore important to make sure that no signals from the modem 1 are present on the telephone line 2 during an alarm condition. Conversely, it is also desirable to suspend the polling of the scanner 3 during off-hook operation of the modem 1. The modem interface device 5 monitors hook status to detect when the modem 1 is using the line, and if this is found to be so, the modem interface device 5 then monitors the low tone level from the STU 4. If the low tone state changes, the device will disconnect the modem 1 from the telephone line 2.

The STU 4 produces a constant low tone of 25 Hz to indicate a normal non-alarm condition. However, this persistent low tone on the telephone line can interfere with the operation of the modem 1, such that the connection speed and general performance of the modem 1 can be impaired. In order to improve the operating characteristics of the modem, the interface device 5 provides a filter to reduce the level of low tone 'heard' by the modem. However, a consequence of providing such a low tone filter is preventing the attenuation of low tone by the modem, and it is this low tone attenuation that is detected by the scanner 3 as an indication of off-hook mode, to suspend polling of the STU 4. It is therefore necessary to synthetically attenuate the low tone in the device when the off-hook status is detected. Since the polarity of the line may reverse, a rectifier is provided at the input stage so that the circuits of the device have a consistent supply. However, the original polarity of the line is restored at the modem output. Through paths for earth and bell wire connections are provided.

The layout of the modem interface device 5 is shown schematically in Figure 2. A disconnect switch unit 11 is provided which performs the function of isolating the modem from the telephone line. The polarity of the input line may reverse, and therefore a rectifier is provided to ensure that the circuitry of the present invention receives a constant power source. The polarity of the input is restored by the disconnect switch unit 11 which uses four FET's in an "H" bridge arrangement. A fifth FET is connected to the gates of two of the "H" bridge FET's, and by operating the fifth FET the "H" bridge circuit may be disabled, essentially isolating a modem connected to the output stage from the telephone line at the input.

The "H" bridge FET is controlled by a microcontroller 12, such as an Atmel AVR Tiny 11 Microcontroller, configured to disconnect the modem for a long enough period of time for the alarm conditions to be processed, of the order of 15 minutes. The microcontroller 12 receives signals from an off-hook detector 13 and a low tone detector 14. While the off-hook detector 13 indicates that the modem is on hook, the microcontroller 12 is held in power down mode. When the off-hook detector 13 detects that the modem has gone off-hook, the microcontroller is put into low tone detect mode and low tone is sampled every 20 milliseconds. If a loss of low tone is detected, the "H" bridge circuit is disabled and the modem cut off from the telephone line.

The off-hook current detector 13 consists of a transistor circuit which detects the DC current on the output of the "H" bridge. A DC voltage is present on the line at all times and when a device is connected to the line a current is drawn. It is this current that is detected by the off-hook detector 13 transistor circuit.

The low tone detector 14 works by monitoring the input and output signals of a low tone filter 15. An op-amp, configured as a differential amplifier is connected across the low tone filter 15. The low tone filter 14 is effectively open circuit at low tone frequencies and short circuit for all other frequencies, which produces a large signal at the output of the low tone detector 14 op-amp when low tone is present and minimal response when low tone is absent. The low tone detector circuitry is protected from the DC line voltage by two capacitors on the input, which also serve to further reject low frequency signals. Capacitors in parallel with the feedback resistors of the op-amp provide additional high frequency roll off.

The low tone filter 15 also serves to screen the modem from low tone constantly fed onto the telephone line by the STU. The low tone filter 15 comprises a bridged differentiator circuit driving the gate of a series pass FET. The FET is configured as a source follower and is DC biased to drop approximately 4 volts. This DC voltage drop blocks AC signals passing directly through.

The scanner in operation at the telephone exchange monitors low tone in order to detect either of two states. Firstly, the presence or absence of low tone indicates the state of the subscriber's alarm system. Secondly, the level of low tone is monitored as an indication that a telephone has gone off-hook. The scanner will then suspend polling of the STU, as polling signals interfere with spoken conversation. Attenuation of low tone is caused by the increased resistance on the line as the telephone is connected across the line. A modem connected to the telephone line would ordinarily have the same attenuating effect on the low tone signal when it went off-hook and the scanner would be able to detect when to suspend polling. However, the presence of a low tone filter in series with the modem prevents the modem attenuating low tone. Therefore a low tone attenuator 16 is provided. This takes the form of a transistor, controlled by the off-hook detector 13, which connects a resistor across the line simulating the shunt effect of an off-hook telephone.

A power supply 17 supplies power to the microcontroller 12. A 0.22 Farad electrolytic capacitor is placed in series with the low tone attenuator 6 so that the capacitor is charged when the modem is off-hook. A 5 volt Zener diode regulates the charge, the capacitor bypasses the Zener diode to further attenuate low tone while reducing its effect on DC current.

All sensitive components of the modem interface device are protected from the high voltage ringing signal by Zener diodes.

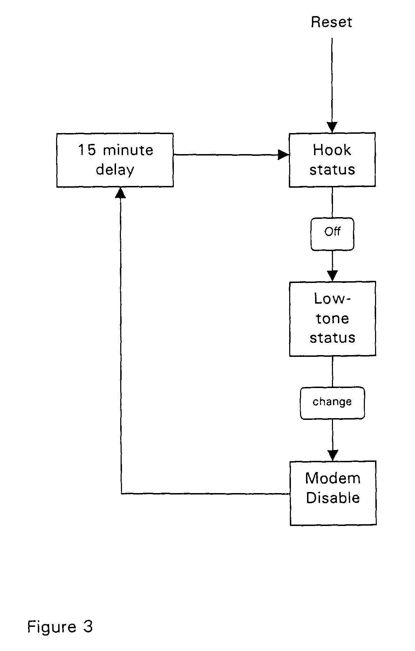

The operation of the modem interface device is shown sequentially in Figure 3. Power is applied and the device reset, upon which hook status is monitored at the modem connection. Off-hook is recognised when the DC current level increases as a modem connects to the telephone line with a subsequent drop in impedance. When off-hook state is detected, the off-hook monitor is disabled and a timer set to interrupt every 20 milliseconds and the modem interface device switches the equipment into low-tone detection mode. If the absence of low-tone is detected, control software will disconnect the modem from the telephone line for 15 minutes to allow the exchange scanner to poll the STU and for the STU to respond. If the same state exists after 15 minutes, i.e. off-hook status and no low-tone detected, the unit will reset the disconnect time to a further 15 minutes.

## Claims

1. A method of interfacing a terminal device comprising;
monitoring the presence or absence of supervisory signals on a telecommunications link, and
disconnecting the terminal device from the telecommunications link upon detection of the absence of the supervisory signals.

2. A telecommunications interface device comprising;
a first port for connection to a terminal device,
a second port for connection to a telecommunications link,
a link connecting the two ports,
a sensor for sensing the presence or absence at the second port of supervisory signals within a defined frequency band, and
control means operable in response to cessation of the supervisory signals to break the connection between the two ports.

3. A telecommunications interface device as claimed in claim 2, including timing means arranged to permit reconnection of the two ports only after a set time delay, and only if the supervisory signals have resumed.

4. A telecommunications interface device as claimed in claims 2 or 3, including a band-stop filter connecting the first and second ports,
means for recognising a reduction in impedance presented at the first port by a terminal device connected thereto, and
means responsive to such reduction to present a reduced impedance at the second port.

5. A method of interfacing a terminal device comprising;
screening a terminal device connected to a telecommunication link from a supervisory signal present on the telecommunication link,
monitoring the activity of the terminal device,
attenuating the supervisory signal on the telecommunication link in response to terminal device activity.

6. A telecommunications interface device comprising;
a first port for connection to a terminal device,
a second port for connection to a telecommunications link,
a band-stop filter connecting the first and second ports,
means for recognising a reduction in impedance presented at the first port by a terminal device connected thereto, and
means responsive to such reduction to present a reduced impedance at the second port.
